(19) Europäisches Patentamt

European Patent Office

Office européen des brevets

(11) Publication number: **0 486 092 A1**

## (12) EUROPEAN PATENT APPLICATION

(21) Application number: **91202868.5**

(22) Date of filing: **05.11.91**

(51) Int. Cl.5: **C08B 31/04**

(30) Priority: **12.11.90 EP 90202979**

(43) Date of publication of application:
**20.05.92 Bulletin 92/21**

(84) Designated Contracting States:
**BE DE ES FR GB IT NL**

(71) Applicant: **AKZO N.V.**
**Velperweg 76**
**NL-6824 BM Arnhem(NL)**

(72) Inventor: **Jonker, Eduard Herman**
**Eenlandsweg 9**
**NL-4661 LH Halsteren(NL)**

(74) Representative: **Schalkwijk, Pieter Cornelis et al**
**AKZO N.V., Patent Department (Dept. CO),**
**P.O. Box 9300**
**NL-6800 SB Arnhem(NL)**

(54) Fatty esters of starch, method of preparing and use.

(57) Fatty esters of particular alkoxylated starches and dextrins are provided, which fatty esters possess sufficient hydrophobicity and other desirable properties making them suitable for use as replacements for traditional petrochemical polymers. The fatty esters are particularly suitable for use as binders in coating, adhesive and ink compositions. The preparation of these fatty esters is also advantageous as it can be conducted under conditions largely known from alkyd and polyester chemistry.

Rank Xerox (UK) Business Services
(-/2.19/2.0)

## Background of The Invention

The present invention relates generally to fatty esters of certain polysaccharides, namely starch and starch derivatives such as dextrins, which are particularly suitable for use as binders in coating, adhesive and ink compositions.

Over the last few years, there has been an increasing interest in the chemical industry to replace petrochemical products with natural products. Starches are generally available in large quantities and at reasonable prices, and would seem to be a logical choice as natural starting materials.

In general, however, unmodified starches contain a large number of hydroxyl groups, rendering these compounds strongly hydrophilic and insoluble in non-polar solvents.

These starches may be modified with short alkyl groups by esterification and/or etherification of the hydroxyl groups via, for example, acetylation and ethoxylation. See, for example, GB1025152, US2340338, US2376378, US2462210, US2492203, US3022289, US3281411, US3372206, US3732207, DE-AS-1238890 and EP-A-0204353. Also known are the simple starch esters of higher carboxylic acids. See, for example, DE-PS-478127, DE-PS-484242, SU348576, US1651366, US1959590, US2462210, US3293241, US3824085 and US4011392.

The preparation of certain of these starch esters requires the use of acid halides or anhydrides, and/or strong acid catalysts, which components are expensive, not readily commercially available and/or the use of which can result in processing problems. Further, the modification is normally conducted at low reaction temperatures over long reaction times. Still further, although in theory any desirable degree of substitution can be obtained, the resulting products in and of themselves have not been found wholly suitable in applications such as mentioned above.

The lack of readily available modified starches possessing sufficient hydrophobicity and properties similar to those of traditional petrochemical polymers has, up to now, limited their development as industrial starting materials.

As a result, very few starch esters have ever found any significant commercial application.

## Summary of the Invention

In response to these needs, there has now been discovered a particularly advantageous starch ester which is not only suitable for the aforementioned uses, but also which can be produced in a simple manner, using readily available components, and under commercially advantageous process conditions.

In its overall concept, the starch esters in accordance with the present invention comprise the (trans)esterification product of (a) a starch component with (b) an acyl group-containing component, characterized in that

(a) the starch component comprises an alkoxylated starch component selected from one or more of

(1) a propoxylated starch having a mass substitution of at least 2,5,

(2) a propoxylated dextrin having a mass substitution of at least 2,0,

(3) a butoxylated starch having a mass substitution of at least 0,5 and

(4) a butoxylated dextrin having a mass substitution of at least 0,3; and

(b) the acyl group-containing component is selected from one or more of

(1) fatty acids and

(2) fatty oils having 8-40 carbon atoms.

These starch esters generally possess good thermal stability and desirable solubility/dispersibility in non-polar organic solvents, making them especially suited for use as replacements for petrochemical products and, particularly, as binders in coating, adhesive and ink compositions.

As just indicated, the starch esters in accordance with present invention are produced by the (trans)esterification of the aforementioned alkoxylated starch and acyl group-containing components. A particular advantage to the use of these components is that the (trans)esterification can be, and preferably is, conducted under reaction conditions largely known from alkyd and polyester chemistry, for example, higher temperatures and conveniently short reaction times.

These and other features and advantages of the present invention will be more readily understood by one skilled in the art from a reading of the following detailed description.

## Detailed Description of the Preferred Embodiments

As mentioned earlier, the starch esters in accordance with the present invention comprise the (trans)esterification product of (a) a starch component with (b) an acyl group-containing component, wherein

(a) the starch component comprises an alkoxylated starch component selected from one or more of

(1) a propoxylated starch having a mass substitution of at least 2,5,

(2) a propoxylated dextrin having a mass substitution of at least 2,0,

(3) a butoxylated starch having a mass substitution of at least 0,5 and

(4) a butoxylated dextrin having a mass substitution of at least 0,3; and

(b) the acyl group-containing component is selected from one or more of

(1) fatty acids and

(2) fatty oils having 8-40 carbon atoms.

As suitable starting starch materials may be mentioned any one of a number of natural starches such as, for example, corn starch, potato starch, wheat starch, rice starch, tapioca starch and sorgum starch. These natural starches generally comprise amylose as well as amylopectin, and generally possess a number average molecular weight (Mn) on the order of from about $10^5$ to about $10^9$.

Alternatively, the starting starch may be degraded in a known manner, for example, with an acid or in accordance with known oxidative, enzymatic and/or mechanical methods. Such degraded starches are commonly referred to as dextrins. Degradation of the starch may occur beforehand and may also be effected during the derivation steps as further discussed below.

Especially preferred for use with the present invention are dextrins possessing an Mn in the range of from about 1000 to about 50000.

Alkoxylation of the starch starting material may be carried out in any normal manner, for example, etherification with propylene oxide or butylene oxide. Via these well-known procedures, one skilled in the art can readily alkoxylate the starting starch material to the desired degree.

It has been found that, to achieve reasonable (trans)esterification rates, the starch component must be sufficiently alkoxylated depending upon molecular weight of the starting starch. It is preferred that a propoxylated starch should have a mass substitution of at least 2,5, more preferably at least 3,0; a propoxylated dextrin should have a mass substitution of at least 2,0, more preferably at least 2,25; a butoxylated starch should have a mass substitution of at least 0,5, more preferably at least 1,0; and a butoxylated dextrin should have a mass substitution of at least 0,3, more preferably at least 0,5.

As utilized herein, a "propoxylated" starch or dextrin refers to a starch or dextrin which is primarily (but not necessarily exclusively) propoxylated, while a "butoxylated" starch or dextrin refers to a starch or dextin which is primarily (but again not necessarily exclusively) butoxylated.

Mass substitution, as is generally recognized in the art, refers to the average number of molecules reacted per anhydroglucose unit. As utilized herein, the mass substitution of a propoxylated starch or dextrin refers to the average number of propylene oxide molecules reacted per anhydroglucose unit, while the mass substitution of a butoxylated starch or dextrin refers to the average number of butylene oxide molecules reacted per anhydroglucose unit. In addition, the "overall" mass substitution refers to the overall average number of alkylene oxide molecules reacted per anhydroglucose unit.

As suitable acyl group-containing compounds for use in the preparation of the starch esters in accordance with the present invention may be mentioned fatty acids and fatty oils having from 8-40 carbon atoms, preferably 12-25 carbon atoms. The fatty acids and oils may be saturated or unsaturated. As examples of suitable saturated fatty acids and oils may be mentioned stearic acid, lauric acid, palmitic acid, myristic acid, behenic acid and arachidic acid, as well as natural mixtures such as coconut oil and the fatty acid derivatives thereof. As examples of suitable unsaturated fatty acids and oils may be mentioned linolenic acid, oleic acid, erucic acid, ricinoleic acid, licanic acid and eleostearic acid, as well as natural mixtures such as safflower oil, cotton seed oil, ground-nut oil, tall oil, sunflower oil, linseed oil, wood oil, oiticica oil, soybean oil and the fatty acid derivatives thereof.

The starch esters in accordance with the present invention are produced by the (trans)esterification reaction between the alkoxylated starch component and the acyl group-containing component. The (trans)esterification should be carried out in an organic solvent under conditions known from alkyd and polyester chemistry, generally at a temperature ranging from 150°C to 270°C, preferably 160°C to 220°C, and especially 170°C to 210°C.

The reaction between the alkoxylated starch component and the acyl group-containing component is normally carried out under atmospheric pressures. The time of reaction may vary widely depending, for example, on the desired degree of substitution, amount and type of acyl group-containing component and other factors recognizable from alkyd and polyester chemistry. In general, however, reaction times vary normally from about 5 to about 15 hours, the longer times being required for transesterification.

The alkoxylated starch component and acyl group-containing component may be reacted in widely varying ratios depending, of course, on the desired end-product, but it has been found that products most useful as described above can be produced by reacting 0,25-2, more preferably 0,5-1,5, and especially 0,9 to 1,1, molecules of acyl group-containing component per anhydroglucose unit.

During or subsequent to the (trans)esterification reaction, reaction water is withdrawn until the desired total degree of substitution is attained. The water is generally removed by distillation, preferably at reduced pressure and/or by azeotropic distillation using an organic solvent such as toluene, xylene, trichloromethane and methylene chloride.

Optionally, the (trans)esterification reaction may be carried out in the presence of an esterification catalyst such as, for example, an acid such as methane sulfonic acid, p-toluene sulfonic acid, oxalic acid, sulfuric acid, hydrochloric acid, a sulfonic acid cation exchanger, phosphoric acid, nitric acid or a Lewis acid such as zinc chloride, butylchlorotin dihydroxide, tetraisopropyl titanate or the ether adduct of borium trifluoride. These catalysts are generally employed in a concentration ranging from 0 to 10 wt%, preferably from 2 to 4 wt%, based upon the weight of the alkoxylated starch component.

As the (trans)esterification is an equilibrium reaction, depending upon the ratio of the reaction components, either part of the acyl group-containing component or the free hydoxyl groups of the alkoxylated starch component may remain at the end of the (trans)esterification. Should this be considered undesirable due the field of application, this excess can be readily removed by well-known methods.

For example, the excess acyl group-containing component can be converted with an esterifiable hydroxyl compound to form a harmless ester. As examples of suitable hydroxyl compounds may be mentioned ethanol, 1-propanol, ethylene glycol, 1,6-hexane diol, glycerol, tripropylene glycol and pentaerythritol, with the multifunctional hydroxyl compounds preferred. Additionally, the number of free hydroxyl groups of the alkoxylated starch component can be reduced by esterification in a known manner with carboxylic anhydrides and acid halides, for example, acetic anhydride.

The resulting starch esters are readily soluble in a wide variety of non-polar organic solvents and, as a consequence, they may find use as petrochemical substitutes in a large number of fields, for example, as substitutes for synthetic polyols. They have been found particularly suitable for use as binders in a variety of coating, adhesive and ink compositions.

For example, such compositions may be formulated with suitable curing/crosslinking agents such as well-known hydroxyl groups-reactive croslinking agents, like aminoplasts and polyisocyanates, for the hydroxyl group-containing starch esters.

Air-drying and UV-curable coating compositions and offset printing inks may also be formulated based upon the starch esters produced utilizing the acyl groups-containing component based upon unsaturated fatty compounds, optionally including well-known catalysts and accelerators as required.

Such compositions may also include a variety of other well-known additives such as, for example, pigments, coloring agents, pigment dispersing agents, light stabilizers and rheological additives. One skilled in the art can readily formulate suitable compositions including the starch esters of the present invention based upon the desired end use.

The foregoing more general discussion of the present invention will be further illustrated by the following specific examples.

EXAMPLES

Example 1

A propoxylated dextrin (white dextrin 10% soluble in cold water, available under the trade designation Avedex W10-JG-1334 from AVEBE) with a mass substitution of about 3,9 (moles of propylene oxide reacted per anhydroglucose ring), and containing 40% moisture and about 10% propane diol as a by-product of the propoxylation reaction, was esterified with a fatty acid as set forth below.

In these examples, viscosity was measured at 20°C using a Rheomat 30 rotational viscometer, under designation $RM30C_{22}$ (a spindle speed corresponding to setting No. 22, in cup C).

Into a flask were introduced:

| | |
|---|---|
| 503,0 g | of the propoxylated dextrin, |
| 701,5 g | of safflower fatty acid, |
| 1,0 g | of esterification catalyst (butylchlorotindihydroxide, commercially available under the trade designation Fascat 4101 from M&T Chemicals) and |
| 100,0 g | of toluene. |

The temperature of the mixture was gradually increased, with stirring, until reflux of the water-toluene azeotrope (about 80°C), from which the toluene was separated and fed back to the reaction mixture. Heating was continued until substantially all of the moisture had been removed (about 180°C). The esterification water was discharged.

At his point, the contents of the flask appeared homogeneous.

The batch temperature was then increased to 195°C, and maintained for about 5 hours until the acid number had dropped to 12,5 (mg KOH/g resin). The temperature was then raised to 200°C and the reaction allowed to proceed for an additional hour.

The remaining toluene was then distilled off under vacuum, and a brown viscous oil end-product was obtained having an acid number of 9,8 and a vicosity of 150 cPa.s.

Comparative Example 1

Example 1 was repeated in its entirety, except that an ethoxylated dextrin with a mass substitution of about 3,5 (available under the trade designation Avedex W10-JG-1330, from AVEBE) was utilized in place of the propxylated dextrin.

The experiment was unsuccesful because the starch adduct did not form an homogeneous mass with the fatty acid but instead remained in the form of a lump.

Example 2

Into a flask were weighed:

251,5 g of the propoxlyated dextrin of Example 1,
364,2 g of soybean oil,
1,0 g of the esterification catalyst of Example 1 and
100,0 g of toluene.

The contents of the flask were heated and the reaction water removed as in Example 1 until all of the moisture had been removed azeotropically, after which the batch temperature was raised to 200°C and the contents heated until they appeared homogenous (about 3 hours).

Subsequently, 36,0 g of phthalic anhydride were added, follwed by a second 36,0 g after 2 hours and a third 36,0 g after another 2 hours. During this reaction, additional toluene was added as necessary to ensure refluxing.

The reaction was continued until an acid number of 27 was reached, after which the remaining toluene and unreacted phthalic acid were distilled off in vacuo (about 1 hour).

A dark brown, very viscous end-product was obtained having an acid number of 3 and a viscosity of 11.500 cPa.s.

Example 3

Into a flask were weighed:

378,0 g of the propoxlyated dextrin of Example 1,
376,0 g of tall oil fatty acid
0,7 g of tetraisopropyl titanate (esterification catalyst) and
100,0 g of toluene.

The contents of the flask were heated and the reaction water removed as in Example 1 until all of the moisture had been removed azeotropically. Additional toluene was periodically added to keep the reflux going.

After the mass became homogeneous, the temperature was cooled to 100°C and 74,0 g of phthalic anhydride added. The temperature of the reaction mixutre was again raised to 190°C, and maintained for 5 hours. The reaction water was removed during this time azeotropically. Subsequently the remaining toluene was distilled off in vacuo.

Obtained was a dark brown, viscous end-product having an acid number of 28 and a viscosity of 1.534 cPa.s.

Example 4

A propoxylated, slightly ethoxylated and slightly degraded starch with an overall mass substitution of about 3,0, and containing 43,9 wt% water and 18 wt% glycols as a by-products of propoxylation (available under the trade designation Avelez 1030-JG-1391 from AVEBE), was esterified with a fatty acid as follows.

Into a flask were weighed:

148,5 g of the propoxylated dextrin,
220,0 g of linseed oil,
0,8 g of the esterification catalyst of Example 1 and
50,0 g of toluene.

The contents of the flask were heated and the reaction water removed as in Example 1. As the temperature of the reaction mixture reached about 180°C, the mass gradually became homogeneous.

The mass was then cooled to 100°C and 41,5 g of phthalic anhydride added, after which the reaction temperature was again raised to 180°C and maintained until an acid number of 11 was reached (about 9 hours). During this time, additional toluene was periodically added for proper reflux.

After distilling off the toluene in vacuo, a dark brown, viscous oil end-product was obtained having an acid number of 11 and a viscosity of 12.300 cPa.s.

Example 5

A propoxylated dextrin with a mass substitution of about 2,4, and containing 36,0 wt% water, 11,4 wt% propylene glycol, 5,8 wt% dipropylene glycol and 1 wt% tripropylene as by-products of the propoxylation (available under the trade designation Avedex W10-HO-5556 from AVEBE), was esterified with a fatty acid as follows.

In a round bottom flask equipped with a stirrer, packed column, cooler and separator with reflux were charged:

300,0 g of the propoxylated dextrin,
458,0 g of a saturated fatty acid (acid equivalent weight 276) (commercially available under the trade designation Pristerene 4963 from Unilever),

0,9 g      of the esterification catalyst of Example 1 and

100,0 g      of toluene.

The contents of the flask were gradually heated with stirring. At a temperature of about 90°C azeotropic distillation of the water began, from which the toluene was separated and returned to the reaction mixture.

The temperature was allowed to rise up to 190°C, and kept at this level for about 6 hours. During this time, additional toluene was added as necessary to maintain proper reflux.

Upon cooling of the reaction mixture, a very thick, dark colored homogeneous syrup was obtained having a solids content of 92% and an acid number of 20. Upon dilution with toluene to 79% solids, the viscosity was 8 cPa.s.

Example 6

The propoxylated dextrin of example 5 was washed with acetone to remove most of the water and glycols. After washing, the product contained 5,0 wt% water, 1,4 wt% propylene glycol and 0,5 wt% dipropylene glycol.

In a round bottom flask equipped with a stirrer, packed column, cooler and separator with reflux were charged:

140,0 g      of the washed dextrin,

100,0 g      of palm kernal oil and

0,24 g      of the esterification catalyst of Example 1.

The contents of the flask were gradually heated with gentle stirring. At first, a lump was formed from the tacky dextrin. As the temperature reached 180-200°C, the mass slowly homogenized. After about 8 hours at this temperature, during which some acetone and water were collected, the dextrin became completely dissolved in the oil and a viscous oil was formed.

2 hours after the mass became homogenous, the batch was cooled and 290,0 g of xylene added to keep the material stirrable. The obtained dextrin adduct was a dark colored viscous oil with a solids content of 41 wt% and a viscosity of 2100 cPa.s.

Example 7

A butoxylated dextrin with a mass substitution of about 1,1, and containing 50 wt% water, 9,8 wt% butylene glycol and 1,2 wt% dibutylene glycol as by-products of the butoxylation (available under the trade designation Avedex W10-HO-11004, from AVEBE) was esterified as follows.

Into a round bottom flask as set forth in Example 1 were charged:

300,0 g      of the butoxylated dextrin,

327,0 g      of linseed fatty acid,

0,8 g      of the esterification catalyst of Example 1 and

100,0 g      of toluene.

The reaction mixture was gradually heated, with stirring. Reflux of the water-toluene azeotrope began at a temperature of about 80°C, from which the toluene was separated and fed back to the reaction mixture. Heating was continued until substantially all of the moisture had been removed (about 180°C). The esterification water was subsequently discharged.

Upon heating, the mass became homogenous very early but also became very dark colored. After about 10 hours of total reaction time (inlcuding the water removal from the dextrin), an almost black oil was obtained with a solids content of 98,5 wt%, a viscosity of 2200 cPa.s and an acid value of 11.

Only a limited number of preferred embodiments of the present invention have been specifically described and demonstrated above. One skilled in the art, however, will recognize numerous substitutions, modifications and alterations which can be made without departing from the spirit and scope of the invention as limited by the following claims.

**Claims**

1.  A starch ester comprising the (trans)-esterification product of (a) a starch component with (b) an acyl group-containing component, characterized in that

    (a) the starch component comprises an alkoxylated starch component selected from one or more of

    (1) a propoxylated starch having a mass substitution of at least 2,5,

    (2) a propoxylated dextrin having a mass substitution of at least 2,0,

    (3) a butoxylated starch having a mass substitution of at least 0,5 and

    (4) a butoxylated dextrin having a mass substitution of at least 0,3; and

    (b) the acyl group-containing component is selected from one or more of

    (1) fatty acids and

    (2) fatty oils having 8-40 carbon atoms.

2.  The starch ester according to claim 1, characterized in that the alkoxylated starch component comprises a dextrin possessing a number average molecular weight in the range of from about 1000 to about 50000.

3. The starch ester according to claim 1, characterized in that the acyl group-containing component is selected from one or more of (1) fatty acids and (2) fatty oils, having from 12 to 25 carbon atoms.

4. The starch ester according to claim 1, characterized in that it comprises the (trans)-esterification product of (a) and (b) in a ratio of 0,25-2 molecules of acyl group-containing component per anhydoglucose unit.

5. The starch ester according to claim 4, characterized in that it comprises the (trans)-esterification product of (a) and (b) in a ratio of 0,5-1,5 molecules of acyl group-containing component per anhydoglucose unit.

6. The starch ester according to claim 5, characterized in that it comprises the (trans)-esterification product of (a) and (b) in a ratio of 0,9-1,1 molecules of acyl group-containing component per anhydoglucose unit.

7. The starch ester according to any one of claims 1-6, characterized in the the acyl group-containing component comprises one or more unsaturated fatty acids and/or oils.

8. A composition comprising, as binder, an hydroxyl group-containing starch ester according to any one of claims 1-6 and a curing agent for the hydroxyl groups of the starch ester.

9. An air-drying and/or UV curable composition comprising, as binder, the starch ester according to claim 7.

10. A method of producing a starch ester according to any one of claims 1-7 by (trans)-esterifying the alkoxylated starch component and the acyl group-containing component at a temperature ranging from 150°C to 270°C.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 824 085 (J. TENG ET AL.) <br> * examples VIII,IX * <br> * claims 1-13 * <br> --- | 1-10 | C08B31/04 |
| Y | GB-A-365 250 (I.G. FARBENINDUSTRIE AKTIENGESELLSCHAFT) <br> * page 1, line 68 - line 90 * <br> --- | 10 | |
| Y | EP-A-0 264 826 (HENKEL) <br> * page 3, line 40 - line 50 * <br> ----- | 10 | |

| | |
|---|---|
| | **TECHNICAL FIELDS SEARCHED (Int. Cl.5)** |
| | **C08B** |

The present search report has been drawn up for all claims

| Place of search | Date of completion of the search | Examiner |
|---|---|---|
| THE HAGUE | 27 FEBRUARY 1992 | LENSEN H.W.M. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)